# EUROPEAN PATENT SPECIFICATION

(11) **EP 4 040 735 B1**
(45) Date of publication and mention of the grant of the patent: **20.08.2025**
(21) Application number: 20871668.8
(22) Date of filing: 08.09.2020
(51) Int. Cl.: H04L 12/40

(54) **VEHICLE CONTROL DEVICE AND DATA TRANSFER CONTROL METHOD**
FAHRZEUGSTEUERUNGSVORRICHTUNG UND DATENÜBERTRAGUNGSSTEUERUNGSVERFAHREN
DISPOSITIF DE COMMANDE DE VÉHICULE ET PROCÉDÉ DE COMMANDE DE TRANSFERT DE DONNÉES

(30) Priority: 01.10.2019 JP 2019181156
(43) Date of publication of application: 10.08.2022
(73) Proprietor: Astemo, Ltd., Tokyo 100-0004 (JP)
(72) Inventor: IKEDA, Masakazu, Hitachinaka-shi, Ibaraki 312-8503 (JP)
(74) Representative: MERH-IP Matias Erny Reichl Hoffmann Patentanwälte PartG mbB
(86) International application number: PCT/JP2020/033881
(87) International publication number: WO 2021/065370

(56) References cited:
- WO-A1-2017/090351
- JP-A- 2001 177 542
- JP-A- 2003 032 297
- JP-A- 2013 150 259
- JP-A- 2014 060 664
- JP-A- 2018 055 284
- US-A1- 2016 360 497
- US-A1- 2019 068 407
- INOUE, AYAKO; RYUMA, MATSUSHITA; HOTTA, YOSHIFUMI; KAWATE, RYUSUKE: "A Study of Traffic Control on Domain-based In-vehicle Network", IEICE TECHNICAL REPORT, vol. 116, no. 123 (CS2016-19), 30 June 2016 (2016-06-30), JP , pages 49 - 54, XP009535303, ISSN: 0913-5685

## Description

### BACKGROUND OF THE INVENTION

This invention relates to a vehicle control device, and more particularly, to control of data transfer via an in-vehicle network.

A plurality of electronic control units (ECUs) are mounted to a vehicle of recent years, and the ECUs are installed at various places in the vehicle. Those ECUs cooperate with each other to achieve one in-vehicle application. In order achieve such cooperation, data communication between the ECUs is required, and the ECUs are thus coupled to one another by a communication line so that an in-vehicle network is formed.

As a communication protocol to be used on the in-vehicle network, the control area network (CAN) is currently used mainly and widely. Meanwhile, in recent years, a high-level cooperative control system such as automatic driving control has been under development. In such a system, application of a high-speed protocol such as the Ethernet (trademark) and the PCI Express is being considered.

As the related art of this technical field, there is known WO 2017/090351 A1. In WO 2017/090351 A1, there is disclosed a vehicle-mounted gateway device. The vehicle mounted gateway device relays communication between a first vehicle-mounted network transmitting and receiving a first communication frame having a first data portion and a second vehicle-mounted network transmitting and receiving a second communication frame having a second data portion of which size is smaller than that of the first data portion. The vehicle-mounted gateway device includes a generation unit generating the first communication frame by using the second communication frame. The vehicle-mounted gateway device further includes a transmission unit transmitting the first communication frame generated by the generation unit to the first vehicle-mounted network. The generation unit consolidates the second data portions of a plurality of second communication frames to generate the first data portion in the first communication frame.

Moreover, in JP 2013-150259 A, there is disclosed a frame transmission system. The frame transmission system includes: a frame transmitter including: a frame fragmentation unit configured to fragment an input frame so as to output transfer frames when the length of the input frame exceeds a predetermined fragmentation reference frame length, and configured not to fragment the input frame so as to output the input frame as a transfer frame when the length of the input frame is less than or equal to the fragmentation reference frame length; and a reproduction header appending unit configured to append a reproduction header to the transfer frame output from the frame fragmentation unit, the reproduction header including information required when the transfer frames are reproduced at a receiving side; and a frame receiver including a frame reassembling unit for reproducing the original frame from the transfer frames received from the frame transmitter. The reproduction header appending unit varies the header length of the reproduction header to be appended to the transfer frame according to the length of the input frame. US 2019/068407 A1 relates to a network system including a first network through which a frame of a first type is transmitted in accordance with a first communication protocol and a second network in which a frame of a second type is transmitted in accordance with a second communication protocol. A gateway device is connected to the first network and the second network, which receives frames of the first type from the first network and determines whether to transmit data regarding the received frames of the first type to the second network. The gateway device transmits, to the second network, a frame of the second type including data regarding a plurality of the frames of the first type determined to be transmitted to the second network. US 2016/360497 A1 relates to a communication control device including: a real-time communication status extraction unit that acquires a communication timing of real-time data; a dynamic fragment size determination unit that acquires a fragment size of sending data which can be sent until the communication timing acquired by the real-time communication status extraction unit; a fragment processing unit that fragments non-real-time data to have at least a fragment size which is equal to or less than the fragment size acquired by the dynamic fragment size determination unit; and a communication unit that sends the non-real-time data, which is fragmented by the fragment processing unit, before the communication timing of the real-time data.

### SUMMARY OF THE INVENTION

In WO 2017/090351 A1, a plurality of CAN frames which have a small size and a low speed are consolidated in a frame having a high speed and a large size such as that of the Ethernet (trademark) to be transferred, and frames having the small size are transferred based on a protocol employing a communication frame having the large size. However, in a protocol employing a communication frame having a small size and a low speed, real-time property is prioritized. Further, reliability of a bus is high, and the protocol can be implemented by an inexpensive physical layer. Thus, there is a case in which this protocol is used to transfer data having a large volume such as a moving image. In this case, as described in JP 2013-150259 A, it is conceivable to divide a frame having a large size and then transfer the divided frames, but when transfer is executed in parallel in a communication protocol employing a communication frame originally having a small frame size, the band may be strained depending on a method of the division.

This invention has been made in view of the above-mentioned problem, and has an object to provide a control technology for dividing a frame and transferring the divided frames on a communication protocol having a different frame size.

The aforementioned object is solved by the invention according to the independent claims. Further preferred developments are described by the dependent claims. In particular, there is provided a vehicle control device configured to transfer data through a first communication path for transferring data having a low priority and a second communication path for transferring data having a high priority, the second communication path having a transfer speed different from a transfer speed of the first communication path, wherein first transfer data transferable on the first communication path has a data size different from a data size of second transfer data transferrable on the second communication path, wherein the second communication path allows at least two types of transfer data to be transmitted and received thereon, and wherein, when the first transfer data is divided and is then transferred on the second communication path, the data is transferred by controlling at least one of a division size, the number of divisions, or a transfer timing of the first transfer data based on a timing cycle for transferring the second transfer data, a vacant time having no transfer, and a transfer time of the first transfer data on the second communication path.

According to the at least one aspect of this invention, the first transfer data usually transferred on the first communication path can be transmitted and received through the second communication path. Problems, configurations, and effects other than those described above become apparent from the following description of embodiments.

### BRIEF DESCRIPTION OF THE DRAWINGS

FIG. 1 is a view for illustrating a configuration of a drive system for a vehicle according to a first embodiment of this invention.
FIG. 2 is a timing charts for illustrating related-art transfer timings.
FIG. 3 is a timing chart for illustrating a transfer timing according to the first embodiment.
FIG. 4 is a flowchart of transfer control according to the first embodiment.
FIG. 5 is a timing chart for illustrating a transfer timing according to a second embodiment.
FIG. 6 is a flowchart of transfer control according to the second embodiment.
FIG. 7 is a configuration diagram for illustrating a vehicle control device and an in-vehicle network system.
FIG. 8 is a flowchart of transfer control according to a fourth embodiment.

### DETAILED DESCRIPTION OF THE PREFERRED EMBODIMENTS

Description is now given of embodiments of this invention.

### <Vehicle Control Device>

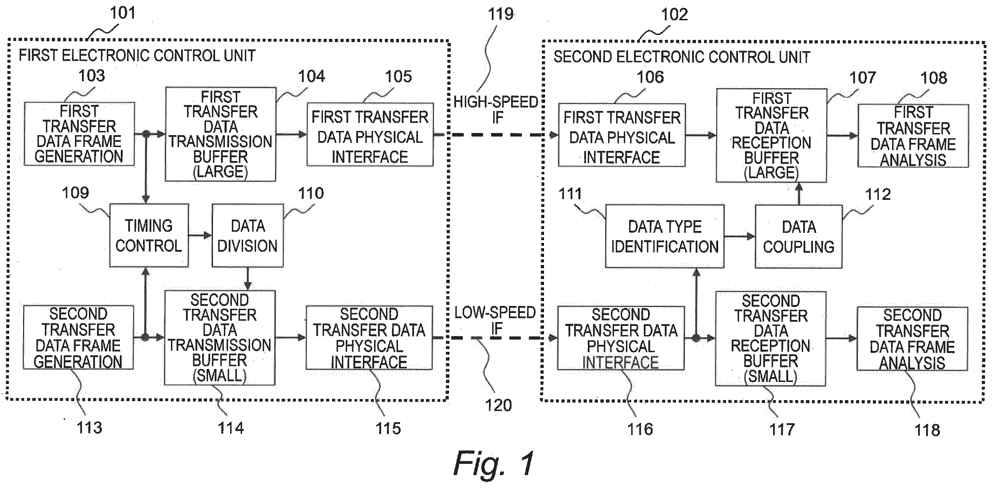

FIG. 1 is a configuration diagram of a vehicle control device and an in-vehicle network system.

A first electronic control unit 101 on a transmission side includes a first transfer data frame generation unit 103, a first transfer data transmission buffer 104, and a first transfer data physical interface 105 for processing first transfer data which is a frame having a large data size. The first electronic control unit 101 further includes a second transfer data frame generation unit 113, a second transfer data transmission buffer 114, and a second transfer data physical interface 115 for processing second transfer data which is a frame having a small data size. The first electronic control unit 101 further includes a timing control unit 109 and a data division unit 110. The timing control unit 109 controls a transfer timing of each transfer data frame. The data division unit 110 divides the first transfer data in accordance with control of the timing control unit 109. Meanwhile, a second electronic control unit 102 on a reception side includes a first transfer data physical interface 106, a first transfer data reception buffer 107, and a first transfer data frame analysis unit 108 for the first transfer data which is the frame having the large data size. The second electronic control unit 102 further includes a second transfer data physical interface 116, a second transfer data reception buffer 117, and a second transfer data frame analysis unit 118 for the second transfer data which is the data frame having the small data size. The second electronic control unit 102 further includes a data type identification unit 111 and a data coupling unit 112. The data type identification unit 111 identifies a type of data which has been transferred via the second transfer data physical interface 116. The data coupling unit 112 couples the pieces of data which have been divided and then transferred.

The transfer data having the large data size is transmitted and received via a bus of a high-speed interface 119. The transfer data having the small data size is transmitted and received via a bus of a low-speed interface 120. In FIG. 1, only a transmission unit of the first electronic control unit 101 and a reception unit of the second electronic control unit 102 are illustrated, but each of the electronic control units 101 and 102 generally has a transmission function and a reception function. However, description is given while the provided transmission function and reception function are omitted. Moreover, the transfer data frame generation units 103 and 113 and the transfer data frame analysis units 108 and 118 are coupled to other circuits and software modules included in the respective electronic control units 101 and 102 and are controlled, but description is given while the other circuits and software modules are omitted. Moreover, in FIG. 1, processing circuit portions for transferring the first transfer data frame having the large data size and the second transfer data frame having the small data size are illustrated, but protocols to be used in the high-speed interface 119 and the low-speed interface 120 are not particularly limited. Moreover, description is given while assuming that the first transfer has a larger data size of the frame than that of the second transfer, but the data size of the frame may be the same between the first transfer and the second transfer, and the data size of the frame is not particularly limited.

### <Transfer Timings and Transfer Flow>

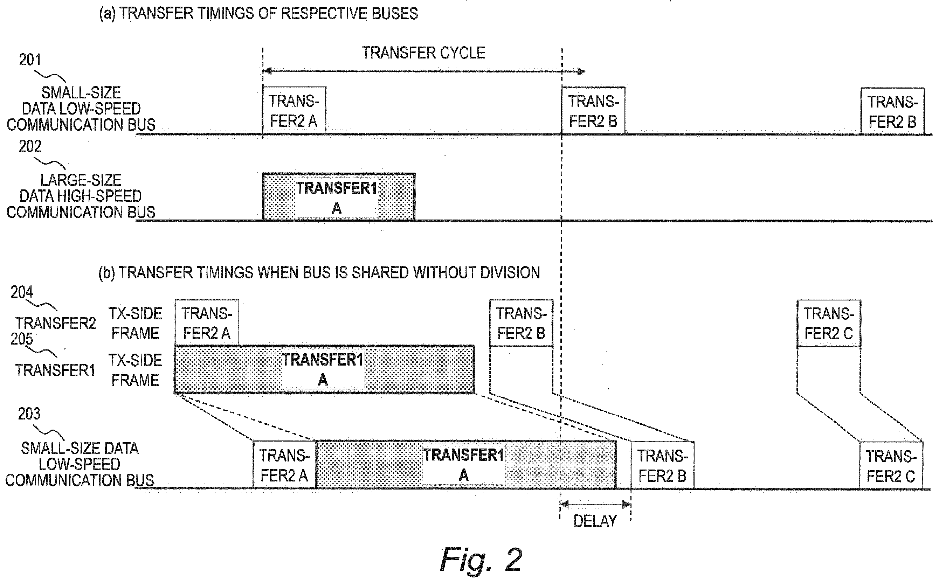

With reference to FIG. 2, FIG. 3, and FIG. 4, description is now given of control to be performed in the in-vehicle network system. FIG. 2 is timing charts for illustrating related-art transfer timings. In FIG. 2(a), transfer timings on respective buses are illustrated. In FIG. 2(b), transfer timings in a case in which a bus is shared without the division are illustrated.

Hitherto, transfer data 201 having the small data size is transferred via the bus of the low-speed interface 120, and transfer data 202 having the large data size is transferred in parallel via the bus of the high-speed interface 119. When the communication interfaces are independent of each other, the communication can be executed without problem. However, when pieces of transfer data 204 and 205 are transferred while a bus 203 of the low-speed interface 120 is shared with no consideration of division, the bus is occupied for a transfer period of the transfer data 205 having the large data size. Thus, the transfer of the transfer data 204 which has the small data size and is intended to be cyclically transferred is delayed.

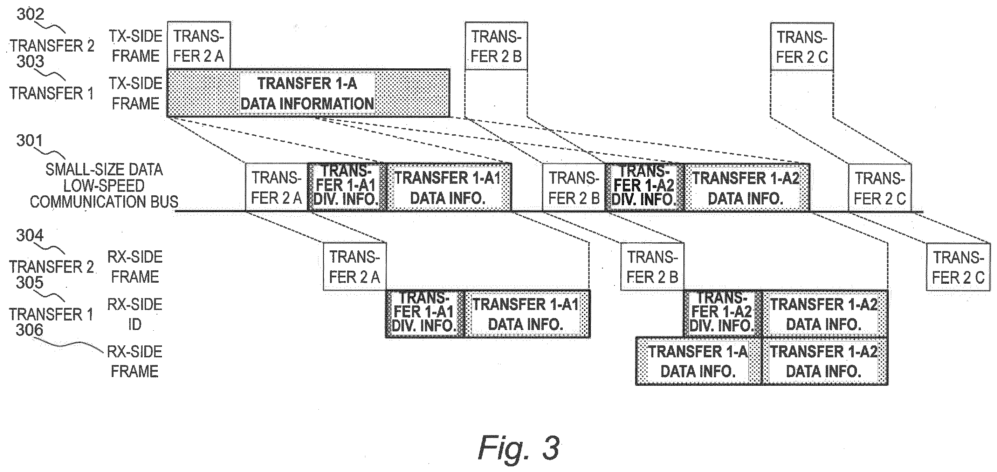

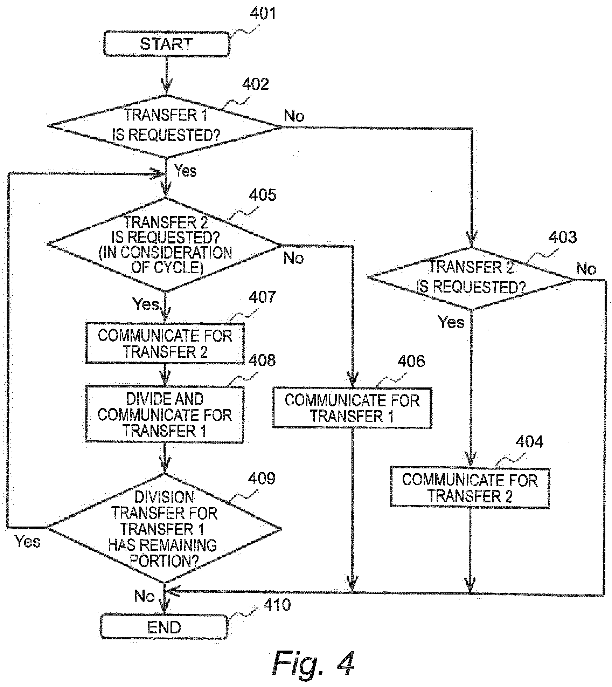

In view of the above, in a first non-claimed example, a transfer cycle and a transfer request of each piece of transfer data are measured to control a size of the division and a transfer timing of transfer data (transfer 1) 303 having the large data size. For example, transfer data (transfer 2) having the small data size is control data for control between the electronic control units, and has the small data size, but is transferred via the bus of the low-speed interface 120 which prioritizes real-time property and reliability. Meanwhile, the transfer data (transfer 1) having the large data size is, for example, video data acquired from a camera or the like, and is transferred between the electronic control units. In a physical interface for transferring data having a high speed and a large size, a physical layer, processing circuits, and the like are also required to have an expensive and highly functional configuration in order to achieve high speed and high reliability. In order to achieve this purpose, with reference to a transfer timing chart of FIG. 3 and a flowchart of FIG. 4, description is given of a method of transferring the data (transfer 1) having the large data size without using the bus of the high-speed interface 119.

In the first electronic control unit 101 on the transmission side, the timing control unit 109 measures, in advance, the transfer cycle of transfer data (transfer 2) 302 having the small data size, or acquires the transfer cycle as information in an initial sequence, and determines whether or not there exists a transfer request for the transfer data (transfer 1) 303 having the large data size (Step 402). The timing control unit 109 further determines whether or not a transfer request for the transfer data (transfer 2) 302 having the small data size exists (Step 403 and Step 405). At this time, the timing control unit 109 determines, in consideration of the transfer cycle of the transfer data (transfer 2) 302 having the small data size acquired in advance, whether or not the transfer request for the transfer data (transfer 2) 302 having the small data size exists within the transfer time of the transfer data (transfer 1) 303 having the large data size.

As a result, when only the transfer request for the transfer data (transfer 2) having the small data size exists ("Yes" in Step 403), the transfer data (transfer 2) having the small data size is communicated via the bus of the low-speed interface 120 (Step 404). At this time, the transfer data including an identification code for the reception side to identify the type of the transmitted transfer data is communicated.

Further, when only the request for the transfer (transfer 1) having the large data size exists ("No" in Step 405), the transfer data (transfer 1) having the large data size is communicated via the bus of the low-speed interface 120 (Step 406). In this case, when the communication cycle of the transfer data (transfer 2) having the small data size is not influenced, the transfer data (transfer 1) which is not divided and thus has the large data size may be communicated via the bus of the low-speed interface 120. At this time, as described above, the transfer data including the identification code for the reception side to identify the type of the transmitted transfer data is communicated.

Meanwhile, when the transfer request for the transfer data (transfer 1) having the large data size overlaps the transfer cycle of the transfer data (transfer 2) having the small data size, the transfer data (transfer 2) having the smaller data size is communicated preferentially (Step 407), and then, the transfer data (transfer 1) having the large data size is communicated (Step 408). In this case, the following control is executed: an appropriate size of division and the number of divisions are calculated in consideration of the transfer cycle of the transfer data (transfer 2) having the small data size in order to avoid collision with the communication of the next transfer 2, the transfer data having the large data size is divided into divisions so that the calculated size of the division and number of divisions are achieved, and the divided transfer data is communicated. In the communication of the transfer data (transfer 1) having the large data size, for example, division information is added to a data portion and is transmitted and received so that the reception side can recognize the size of the division and the number of divisions.

When the data which has been divided and transferred has a remaining portion (Step 409), and successive transfer of the remaining portion causes a collision with the communication of the transfer data (transfer 2) having the small data size, for example, control of waiting for the next transfer and then transferring the remaining data is executed. As a result, the communication for the transfer data (transfer 2) having the small data size occupies the bus with the highest priority, and the transfer data (transfer 1) having the large data size can be communicated in a communication vacant time of the transfer data (transfer 2) having the small data size.

Meanwhile, the type of the received data is identified in the data type identification unit 111 of the second electronic control unit 102 on the reception side. The identification code indicating the type of the data is added to the transfer data and is then transferred, and hence the reception side can determine the type of the received data based on this identification code.

When the transfer data (transfer 2) 304 having the small data size is received via the bus of the low-speed interfaces 120 and 116, the received data is input to the second transfer data frame analysis unit 118 via the second transfer data reception buffer 117, and is processed as a data frame of the second transfer data. Moreover, when the transfer data (transfer 1) 305 having the large data size is received via the bus of the low-speed interfaces 120 and 116, the divided data is restored through coupling of the data by the data coupling unit 112 based on the division information. The resultant data is input to the first transfer data frame analysis unit 108 via the first transfer data reception buffer 107, and is processed as the first transfer data frame.

As a result, the transfer data having the large data size can also be transferred easily via the low-speed interface 120 without interfering with the transfer of the data having the small data size.

### <Case of Suspension of Transfer>

In the first embodiment, description has been given of the configuration in which the transfer data having the large data size is divided in advance and is successively transmitted based on the timing control, but when sequence control such as suspension and retransmission is available in the protocol of the physical interfaces, the following control may be executed. Specifically, the transfer of the transfer data (transfer 1) having the large data size is started without the division, the transfer of the transfer data (transfer 1) having the large data size is suspended at a start timing of the transfer of the transfer data (transfer 2) having the small data size, and the transfer of the transfer data (transfer 1) having the large data size is resumed at an end timing of the transfer of the transfer data (transfer 2) having the small data size. Also with this process, the transfer data having the large data size can be transferred easily via the low-speed interface 120 without interfering with the transfer of the data having the small data size.

### Embodiment

### <Transfer Timing and Transfer Flow: Case of Transfer of Division Information with Highest Priority>

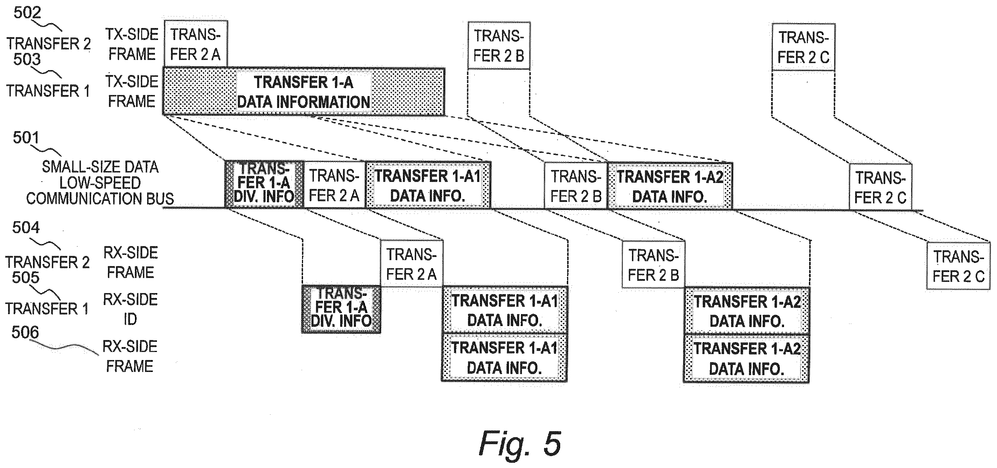

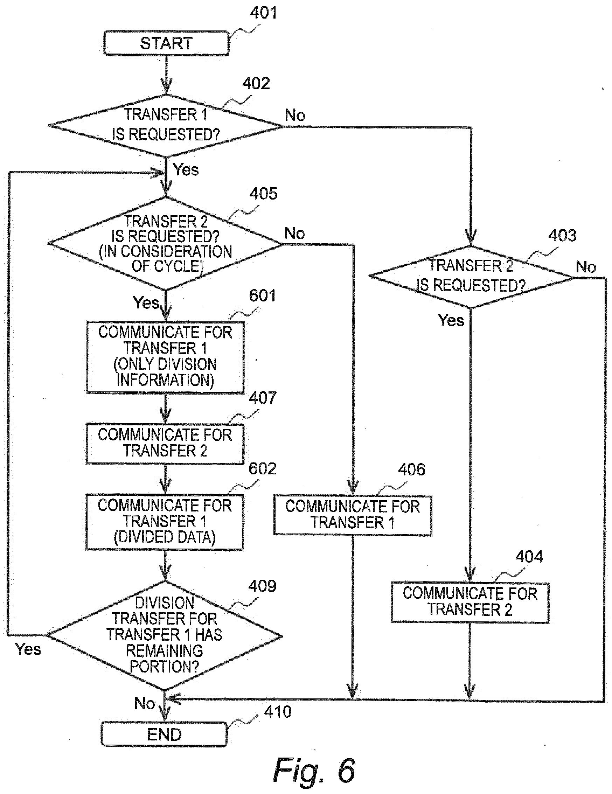

In an embodiment of this invention, a transfer timing chart is illustrated in FIG. 5, and a flowchart is illustrated in FIG. 6. The transfer timing chart and the flowchart are different from the transfer timing chart illustrated in FIG. 3 and the flowchart illustrated in FIG. 4 in the first non-claimed example in that the division information on the transfer 1 is added to only the first divided data. In the second embodiment, differences from the first non-claimed example are mainly described. Further, the same function and processing as those in the first non-claimed example are denoted by the same reference symbols, and description thereof is omitted.

The data division unit 110 on the transmission side adds division information (transfer 1-A) indicating the size of the division, the number of the divisions, and the like to only the first divided data (transfer 1-A1) to transfer the division information (transfer 1-A). In this case, as a priority, the division information is most prioritized; and is transferred first (for example, prioritized over the data of the transfer 2) (Step 601). A data amount of the division information is small, and hence, even when the division information is prioritized over the communication of the transfer data (transfer 2) having the small data size, a wait time of the transfer 2 can be minimized. The division information is not added to the transfer data (transfer 1) having the large data size to be communicated subsequently, and only the divided data portion is transferred (Step 602). As a result, a band occupied by the transfer 1 can be suppressed. Meanwhile, the data coupling unit 112 on the reception side couples the transfer data (transfer 1) having the large data size based on the division information added to the first divided data, to thereby restore the data. The division information is transferred in advance, and hence the data coupling unit 112 can prepare for the coupling processing during the transfer of the divided data, and it is not required to add the division information to the subsequent divided data.

### Second non-claimed example

### <Vehicle Control Device: Case without Provision of High-Speed Interface>

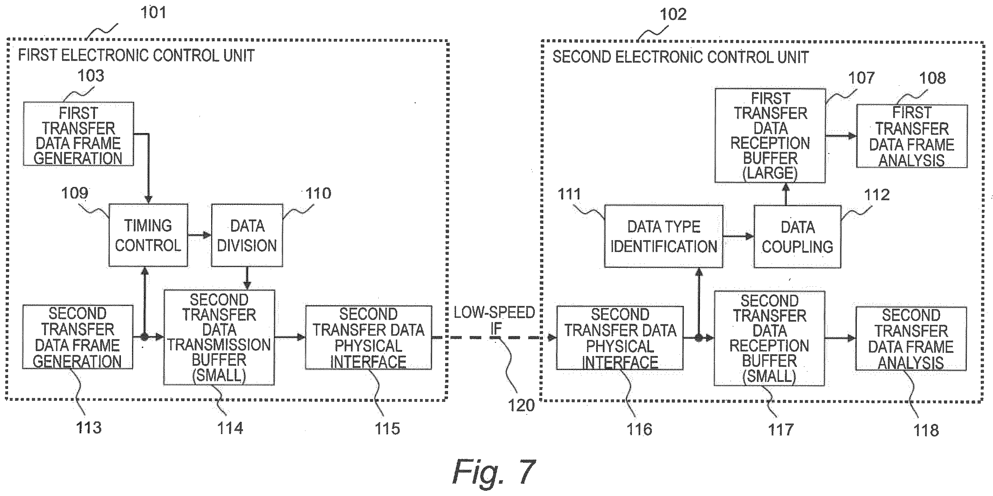

In a second non-claimed example, a configuration diagram of the vehicle control device and the in-vehicle network system is illustrated in FIG. 7. This configuration diagram is different from the configuration diagram of the vehicle control device and the in-vehicle network system in the first non-claimed example, which is illustrated in FIG. 1, in that the first transfer data physical interfaces 105, 106, and 119 and the accompanying first transfer data transmission buffer 104 do not exist. In the second non-claimed example, differences from the first non-claimed example are mainly described. Further, the same function and processing as those in the first non-claimed example are denoted by the same reference symbols, and description thereof is omitted.

The first transfer data having the large data size is divided and is then transmitted and received via the low-speed interface 120. Thus, operation and control equivalent to those in the first non-claimed example can be provided even in an environment in which the high-speed interface 119 implemented by the first transfer data physical interfaces 105 and 106 is not provided.

### Third non-claimed example

### <Transfer Flow: Case of Priority 1 and Priority 2>

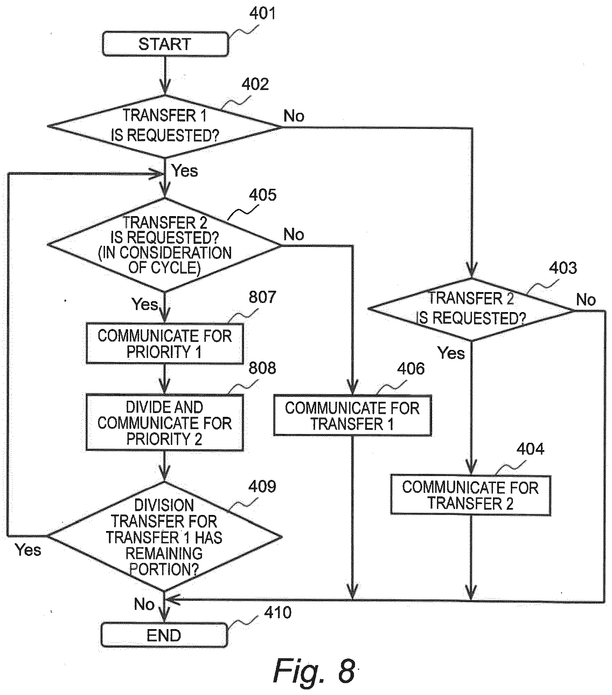

In a third non-claimed example, a flowchart is illustrated in FIG. 8. This flowchart is different from the flowchart in the first non-claimed example illustrated in FIG. 4 in that the transfer is not limited by the transfer 1, the transfer 2, and the frame size, and two types of transfer are defined as transfer of priority 1 and transfer of priority 2. In the third non-claimed example, differences from the first non-claimed example are mainly described. Further, the same function and processing as those in the first non-claimed example are denoted by the same reference symbols, and description thereof is omitted.

When there exist transfer requests for both of the transfer 1 and the transfer 2 ("Yes" in Step 405), the transfer of the priority 1 is transferred preferentially (Step 807), and the size of the division and the number of divisions of the transfer of the priority 2 are controlled in consideration of the transfer cycle of the transfer of the priority 1, to thereby execute the transfer of the priority 2 (Step 808). As a result, as in the first non-claimed example the data of the transfer 1 can be transferred via the low-speed interface 120 without interfering with the transfer 2, which is cyclically transferred. It should be noted that the priority of each transfer may be defined in advance to control each transfer in a fixed manner, or the priority of each transfer may be dynamically controlled while content or a period of the data to be transferred are defined.

In the example in which the two types of transfer data are transferred described here above, but also in a case in which three or more types of transfer data are transferred, an equivalent configuration and control can be provided. For example, in the case in which three or more types of transfer data are transferred, priority may be defined among the divided data.

Moreover, in FIG. 1 and FIG. 7, the timing control unit 109, the data division unit 110, the data type identification unit 111, and the data coupling unit 112 are illustrated as hardware components in the electronic control units 101 and 102, but the configuration is not limited to this example. An equivalent configuration and control can be provided even when those units are implemented by software as equivalent components or are configured in combination with software.

This invention is not limited to the above-described embodiment but includes various modifications.

The above-described configurations, functions, processing modules, and processing means, for all or a part of them, may be implemented by hardware: for example, by designing an integrated circuit, and may be implemented by software, which means that a processor interprets and executes programs providing the functions.

The information of programs, tables, and files to implement the functions may be stored in a storage device such as a memory, a hard disk drive, or an SSD (a Solid State Drive), or a storage medium such as an IC card, or an SD card.

The drawings illustrate control lines and information lines as considered necessary for explanation but do not illustrate all control lines or information lines in the products. It can be considered that almost of all components are actually interconnected.

## Claims

1. A vehicle control device (101, 102) configured to transfer data having a low priority through a first communication path (119) and data having a high priority through a second communication path (120), the second communication path (120) configured to have a transfer speed different from a transfer speed of the first communication path (119),
wherein the vehicle control device (101, 102) is configured to transfer first transfer data on the first communication path (119) and second transfer data on the second communication path (120), wherein the first transfer data has a data size different from a data size of the second transfer data,
wherein the second communication path (120) is configured to allow at least two types of transfer data to be transmitted and received thereon, and
**characterized in that** the vehicle control device (101, 102) is configured to divide the first transfer data and to transfer the divided first transfer data on the second communication path (120), and when this is the case, the vehicle control device (101, 102) is configured to transfer the first transfer data by controlling at least one of a division size, the number of divisions, or a transfer timing of the first transfer data based on a timing cycle for transferring the second transfer data, a vacant time having no transfer, and a transfer time of the first transfer data on the second communication path (120),
wherein the vehicle control device (101, 102) is configured to transfer information for identifying a type of data and information for identifying the number of divisions and a size of the data only initially before the divided data as most prioritized data.

2. The vehicle control device according to claim 1,
wherein the second communication path is configured to transfer data at a transfer speed lower than the transfer speed of the first communication path, and
wherein the first transfer data has a data size larger than or equal to the data size of the second transfer data.

3. The vehicle control device according to claim 1 configured to add information for identifying a type of the data and information for identifying the number of divisions and a size of the data to the first transfer data, and to transfer the first data on the second communication path.

4. The vehicle control device according to claim 1 configured to transfer the second transfer data intended to be transferred on the second communication path on the second communication path in accordance with a priority defined in advance.

5. The vehicle control device (101, 102) according to claim 1 configured to transfer division information on the first transfer data on the second communication path (120) in accordance with a priority defined in advance.

6. The vehicle control device (101, 102) according to claim 1, wherein, when the first transfer data is divided and is then transferred on the second communication path (120), the vehicle control device (101, 102) is configured to suspend transfer of the first transfer data, and to transfer the second transfer data based on a timing cycle for transferring the second transfer data.

7. The vehicle control device (101, 102) according to claim 6, wherein, after the prioritized transfer of the second transfer data is finished, the vehicle control device (101, 102) is configured to transfer a remaining part of the suspended first transfer data.

8. A data transfer control method for transferring data through a first communication path (119) for transferring data having a low priority and a second communication path (120) for transferring data having a high priority, the second communication path (120) having a transfer speed different from a transfer speed of the first communication path,
first transfer data transferable on the first communication path (119) having a data size different from a data size of second transfer data transferrable on the second communication path (120),
the second communication path (120) allowing at least two types of transfer data to be transmitted and received thereon, **characterized in that**
the data transfer control method comprises transferring, when the first transfer data is divided and is then transferred on the second communication path, data by controlling at least one of a division size, the number of divisions, or a transfer timing of the first transfer data based on a timing cycle for transferring the second transfer data, a vacant time having no transfer, and a transfer time of the first transfer data on the second communication path (120), wherein information for identifying a type of data and information for identifying the number of divisions and a size of the data are transferred only initially before the divided data as most prioritized data.

## Patentansprüche

1. Fahrzeugsteuervorrichtung (101, 102), die konfiguriert ist, um Daten mit einer niedrigen Priorität durch einen ersten Kommunikationspfad (119) und Daten mit einer hohen Priorität durch einen zweiten Kommunikationspfad (120) zu übertragen, wobei der zweite Kommunikationspfad (120) konfiguriert ist, um eine Übertragungsgeschwindigkeit aufzuweisen, die sich von einer Übertragungsgeschwindigkeit des ersten Kommunikationspfads (119) unterscheidet,
wobei die Fahrzeugsteuervorrichtung (101, 102) konfiguriert ist, um erste Übertragungsdaten auf dem ersten Kommunikationspfad (119) und zweite Übertragungsdaten auf dem zweiten Kommunikationspfad (120) zu übertragen, wobei die ersten Übertragungsdaten eine Datengröße aufweisen, die sich von einer Datengröße der zweiten Übertragungsdaten unterscheidet,
wobei der zweite Kommunikationspfad (120) konfiguriert ist, um zu ermöglichen, dass mindestens zwei Typen von Übertragungsdaten darauf übertragen und empfangen werden, und
**dadurch gekennzeichnet, dass** die Fahrzeugsteuervorrichtung (101, 102) konfiguriert ist, um die ersten Übertragungsdaten zu teilen und die geteilten ersten Übertragungsdaten auf dem zweiten Kommunikationspfad (120) zu übertragen, und wenn dies der Fall ist, die Fahrzeugsteuervorrichtung (101, 102) konfiguriert ist, um die ersten Übertragungsdaten durch Steuern mindestens eines von einer Teilungsgröße, der Anzahl von Teilungen oder einer Übertragungszeitsteuerung der ersten Übertragungsdaten basierend auf einem Zeitsteuerungszyklus zum Übertragen der zweiten Übertragungsdaten, einer freien Zeit ohne Übertragung und einer Übertragungszeit der ersten Übertragungsdaten auf dem zweiten Kommunikationspfad (120) zu übertragen,
wobei die Fahrzeugsteuervorrichtung (101, 102) konfiguriert ist, um Informationen zum Identifizieren eines Typs von Daten und Informationen zum Identifizieren der Anzahl von Teilungen und einer Größe der Daten nur anfänglich vor den geteilten Daten als am meisten priorisierte Daten zu übertragen.

2. Fahrzeugsteuervorrichtung nach Anspruch 1,
wobei der zweite Kommunikationspfad konfiguriert ist, um Daten mit einer Übertragungsgeschwindigkeit zu übertragen, die niedriger als die Übertragungsgeschwindigkeit des ersten Kommunikationspfads ist, und
wobei die ersten Übertragungsdaten eine Datengröße aufweisen, die größer als oder gleich der Datengröße der zweiten Übertragungsdaten ist.

3. Fahrzeugsteuervorrichtung nach Anspruch 1, die konfiguriert ist, um Informationen zum Identifizieren eines Typs der Daten und Informationen zum Identifizieren der Anzahl von Teilungen und einer Größe der Daten zu den ersten Übertragungsdaten hinzuzufügen und die ersten Daten auf dem zweiten Kommunikationspfad zu übertragen.

4. Fahrzeugsteuervorrichtung nach Anspruch 1, die konfiguriert ist, um die zweiten Übertragungsdaten, die auf dem zweiten Kommunikationspfad übertragen werden sollen, auf dem zweiten Kommunikationspfad gemäß einer im Voraus definierten Priorität zu übertragen.

5. Fahrzeugsteuervorrichtung (101, 102) nach Anspruch 1, die konfiguriert ist, um Teilungsinformationen über die ersten Übertragungsdaten auf dem zweiten Kommunikationspfad (120) gemäß einer im Voraus definierten Priorität zu übertragen.

6. Fahrzeugsteuervorrichtung (101, 102) nach Anspruch 1, wobei, wenn die ersten Übertragungsdaten geteilt werden und dann auf dem zweiten Kommunikationspfad (120) übertragen werden, die Fahrzeugsteuervorrichtung (101, 102) konfiguriert ist, um die Übertragung der ersten Übertragungsdaten auszusetzen und die zweiten Übertragungsdaten basierend auf einem Zeitsteuerungszyklus zum Übertragen der zweiten Übertragungsdaten zu übertragen.

7. Fahrzeugsteuervorrichtung (101, 102) nach Anspruch 6, wobei, nachdem die priorisierte Übertragung der zweiten Übertragungsdaten beendet ist, die Fahrzeugsteuervorrichtung (101, 102) konfiguriert ist, um einen verbleibenden Teil der ausgesetzten ersten Übertragungsdaten zu übertragen.

8. Datenübertragungssteuerverfahren zum Übertragen von Daten durch einen ersten Kommunikationspfad (119) zum Übertragen von Daten mit einer niedrigen Priorität und einen zweiten Kommunikationspfad (120) zum Übertragen von Daten mit einer hohen Priorität, wobei der zweite Kommunikationspfad (120) eine Übertragungsgeschwindigkeit aufweist, die sich von einer Übertragungsgeschwindigkeit des ersten Kommunikationspfads unterscheidet,
wobei erste Übertragungsdaten, die auf dem ersten Kommunikationspfad (119) übertragbar sind, eine Datengröße aufweisen, die sich von einer Datengröße von zweiten Übertragungsdaten unterscheidet, die auf dem zweiten Kommunikationspfad (120) übertragbar sind,
wobei der zweite Kommunikationspfad (120) ermöglicht, dass mindestens zwei Typen von Übertragungsdaten darauf übertragen und empfangen werden, **dadurch gekennzeichnet, dass**
das Datenübertragungssteuerverfahren das Übertragen, wenn die ersten Übertragungsdaten geteilt werden und dann auf dem zweiten Kommunikationspfad übertragen werden, von Daten durch Steuern mindestens eines von einer Teilungsgröße, der Anzahl von Teilungen oder einer Übertragungszeitsteuerung der ersten Übertragungsdaten basierend auf einem Zeitsteuerungszyklus zum Übertragen der zweiten Übertragungsdaten, einer freien Zeit ohne Übertragung und einer Übertragungszeit der ersten Übertragungsdaten auf dem zweiten Kommunikationspfad (120) umfasst, wobei Informationen zum Identifizieren eines Typs von Daten und Informationen zum Identifizieren der Anzahl von Teilungen und einer Größe der Daten nur anfänglich vor den geteilten Daten als am meisten priorisierte Daten übertragen werden.

## Revendications

1. Dispositif de commande de véhicule (101, 102) configuré pour transférer des données ayant une faible priorité à travers un premier chemin de communication (119) et des données ayant une priorité élevée à travers un second chemin de communication (120), le second chemin de communication (120) étant configuré pour avoir une vitesse de transfert différente d'une vitesse de transfert du premier chemin de communication (119),
dans lequel le dispositif de commande de véhicule (101, 102) est configuré pour transférer des premières données de transfert sur le premier chemin de communication (119) et des secondes données de transfert sur le second chemin de communication (120), dans lequel les premières données de transfert ont une taille de données différente d'une taille de données des secondes données de transfert,
dans lequel le second chemin de communication (120) est configuré pour permettre à au moins deux types de données de transfert d'être transmis et reçus sur celui-ci, et
**caractérisé en ce que** le dispositif de commande de véhicule (101, 102) est configuré pour diviser les premières données de transfert et pour transférer les premières données de transfert divisées sur le second chemin de communication (120), et lorsque c'est le cas, le dispositif de commande de véhicule (101, 102) est configuré pour transférer les premières données de transfert en commandant au moins l'un d'une taille de division, du nombre de divisions, ou d'une synchronisation de transfert des premières données de transfert sur la base d'un cycle de synchronisation pour transférer les secondes données de transfert, d'un temps libre n'ayant pas de transfert, et d'un temps de transfert des premières données de transfert sur le second chemin de communication (120),
dans lequel le dispositif de commande de véhicule (101, 102) est configuré pour transférer des informations pour identifier un type de données et des informations pour identifier le nombre de divisions et une taille des données seulement initialement avant les données divisées en tant que données les plus priorisées.

2. Dispositif de commande de véhicule selon la revendication 1,
dans lequel le second chemin de communication est configuré pour transférer des données à une vitesse de transfert inférieure à la vitesse de transfert du premier chemin de communication, et
dans lequel les premières données de transfert ont une taille de données supérieure ou égale à la taille de données des secondes données de transfert.

3. Dispositif de commande de véhicule selon la revendication 1, configuré pour ajouter des informations pour identifier un type des données et des informations pour identifier le nombre de divisions et une taille des données aux premières données de transfert, et pour transférer les premières données sur le second chemin de communication.

4. Dispositif de commande de véhicule selon la revendication 1, configuré pour transférer les secondes données de transfert destinées à être transférées sur le second chemin de communication sur le second chemin de communication conformément à une priorité définie à l'avance.

5. Dispositif de commande de véhicule (101, 102) selon la revendication 1, configuré pour transférer des informations de division sur les premières données de transfert sur le second chemin de communication (120) conformément à une priorité définie à l'avance.

6. Dispositif de commande de véhicule (101, 102) selon la revendication 1, dans lequel, lorsque les premières données de transfert sont divisées et sont ensuite transférées sur le second chemin de communication (120), le dispositif de commande de véhicule (101, 102) est configuré pour suspendre le transfert des premières données de transfert, et pour transférer les secondes données de transfert sur la base d'un cycle de synchronisation pour transférer les secondes données de transfert.

7. Dispositif de commande de véhicule (101, 102) selon la revendication 6, dans lequel, après que le transfert priorisé des secondes données de transfert est terminé, le dispositif de commande de véhicule (101, 102) est configuré pour transférer une partie restante des premières données de transfert suspendues.

8. Procédé de commande de transfert de données pour transférer des données à travers un premier chemin de communication (119) pour transférer des données ayant une faible priorité et un second chemin de communication (120) pour transférer des données ayant une priorité élevée, le second chemin de communication (120) ayant une vitesse de transfert différente d'une vitesse de transfert du premier chemin de communication,
des premières données de transfert transférables sur le premier chemin de communication (119) ayant une taille de données différente d'une taille de données de secondes données de transfert transférables sur le second chemin de communication (120),
le second chemin de communication (120) permettant à au moins deux types de données de transfert d'être transmis et reçus sur celui-ci, **caractérisé en ce que**
le procédé de commande de transfert de données comprend le transfert, lorsque les premières données de transfert sont divisées et sont ensuite transférées sur le second chemin de communication, de données en commandant au moins l'un d'une taille de division, du nombre de divisions, ou d'une synchronisation de transfert des premières données de transfert sur la base d'un cycle de synchronisation pour transférer les secondes données de transfert, d'un temps libre n'ayant pas de transfert, et d'un temps de transfert des premières données de transfert sur le second chemin de communication (120), dans lequel des informations pour identifier un type de données et des informations pour identifier le nombre de divisions et une taille des données sont transférées seulement initialement avant les données divisées en tant que données les plus priorisées.
